Europäisches Patentamt

European Patent Office

Office européen des brevets

(19)

(11) Veröffentlichungsnummer: **0 059 493**
**B1**

(12) # EUROPÄISCHE PATENTSCHRIFT

(45) Veröffentlichungstag der Patentschrift:
23.01.85

(51) Int. Cl.⁴: **H 04 L 25/49,** H 04 L 7/02

(21) Anmeldenummer: **82200144.2**

(22) Anmeldetag: **08.02.82**

(54) **Einrichtung zur Decodierung eines Biphase-codierten Signals sowie Verwendung der Einrichtung.**

(30) Priorität: **27.02.81 CH 1327/81**

(43) Veröffentlichungstag der Anmeldung:
**08.09.82 Patentblatt 82/36**

(45) Bekanntmachung des Hinweises auf die Patenterteilung:
**23.01.85 Patentblatt 85/4**

(84) Benannte Vertragsstaaten:
**CH DE FR GB LI**

(56) Entgegenhaltungen:
**DE - A - 2 546 422**
**FR - A - 2 311 456**
**US - A - 3 804 982**
**US - A - 3 932 705**
**US - A - 3 967 061**
**US - A - 4 185 273**

**ELECTRICAL DESIGN NEWS, Band 17, Nr. 18, 15. September 1972, Seite 43, Boston, USA F. ALFKE: "Exclusive-OR gates simplify modem designs" ELECTRICAL DESIGN, Band 27, Nr. 15, Juli 1979, Seiten 110-116, Rochelle Park, USA J.J. NORTON: "Drop your costs, but not your bits with a Manchester-data decoder"**

(73) Patentinhaber: **BBC Aktiengesellschaft Brown, Boveri & Cie., Haselstrasse, CH-5401 Baden (CH)**

(72) Erfinder: **Masek, Vratislav, Juchstrasse 10, CH-8116 Würenlos (CH)**

## Beschreibung

Die vorliegende Erfindung bezieht sich auf eine Einrichtung zur Decodierung eines in einer Biphase-Codierung empfangenen Signals gemäß dem Oberbegriff des Anspruchs 1 sowie auf eine Verwendung der erfindungsgemäßen Einrichtung.

Es ist eine Einrichtung gemäß dem Oberbegriff des Anspruchs 1 bekannt (Alfke, F.: Exclusive — OR gates simplify modem designs, Electrical Design News, Bd. 17, Nr. 18, 1972, S. 43) zur Decodierung eines im Biphase-Level-Code empfangenen Signals. Dabei wird das empfangene Signal einerseits direkt an einen nachgeschalteten Speicher geleitet, andererseits an ein Zeitglied, das ein das Einlesen in besagten Speicher steuerndes Taktsignal abgibt, wobei die Steuerung des Einlesens so erfolgen muß, daß der Einlesezeitpunkt jeweils in die erste Hälfte des zwischen zwei periodischen Flanken des empfangenen Signals liegenden Zeitabschnitts fällt. Eine ähnliche Einrichtung, welche noch zusätzliche, der Fehlererkennung dienende Schaltungen aufweist, ist aus US-A-3 804 982 bekannt.

Bei derartigen Einrichtungen ist die Taktrate dadurch beschränkt, daß Verzögerungen, die durch die beschränkten Schaltgeschwindigkeiten der das ziemlich komplexe Zeitglied bildenden Komponenten entstehen, nicht dazu führen dürfen, daß das Taktsignal, das das Einlesen steuert, außerhalb des obenangegebenen Zeitabschnitts abgegeben wird.

Hier will die Erfindung Abhilfe schaffen. Die Erfindung, wie sie in den Ansprüchen gekennzeichnet ist, löst die Aufgabe, eine Einrichtung zur Decodierung eines in einer Biphase-Codierung empfangenen Signals zu schaffen, welche Taktraten erlaubt, die, gemessen an den Schaltgeschwindigkeiten der zu ihrer Realisierung verwendeten Bauelemente, außerordentlich hoch sind.

Die Vorteile der Erfindung sind vor allem darin zu sehen, daß die an einen Speicher weiterzuleitenden Daten und das das Einlesen in denselben steuernde Taktsignal durch parallele, dem Zeitglied nachgeschaltete Logikschaltungen erzeugt werden, wodurch gegenseitige zeitliche Verschiebungen von Datensignal und Taktsignal auch dann weitgehend unterbunden sind, wenn im Vergleich zur Periodenlänge große, insbesondere durch das Zeitglied verursachte, Verzögerungen auftreten.

Die erfindungsgemäße Einrichtung ist anwendbar bei allen zweiwertigen Codes, bei welchen die Polaritäten derjenigen Signalflanken, welche in konstanten Zeitabständen vorkommen, die Träger der zu übertragenden Information sind.

Die Polarität der periodischen Signalflanke (ansteigende oder abfallende Flanke) variiert entsprechend den übertragenen Daten (Datenübertragungsrate = 1/2T), so daß man für den Biphase-Level-Code folgende Zuordnung festlegen kann: z. B. eine ansteigende periodische Flanke bedeutet logisch Null, eine abfallende periodische Flanke bedeutet logisch Eins.

Für den Biphase-Mark Code gilt folgende Zuordnung: Keine Änderung der Polarität der periodischen Flanke gegenüber der vorangehenden periodischen Flanke bedeutet logisch Eins, eine Änderung der Polarität bedeutet logisch Null. Der Biphase-Space Code ist invers zum Biphase-Mark Code, d. h. keine Änderung der Polarität bedeutet logisch Null, eine Änderung bedeutet logisch Eins.

Nachfolgend werden anhand schematischer Zeichnungen Ausführungsbeispiele der Erfindung näher erläutert. Es zeigt

Fig. 1a ein Beispiel eines Impulsdiagramms von zu übertragenden digitalen Daten,

Fig. 1b die Daten Fig. 1a in den an sich bekannten Biphase-Level Code umgesetzt,

Fig. 1c die Daten Fig. 1a in den an sich bekannten Biphase-Mark Code umgesetzt,

Fig. 1d die Daten Fig. 1a in den ebenfalls bekannten Biphase-Space Code umgesetzt,

Fig. 2a beispielsweise Datensätze im Biphase-Level Code mit einem auf minimalen Zeitverlust optimierten Startzeichen,

Fig. 2b die Abtastimpulse für die Datensätze nach Fig. 2a,

Fig. 3 den Schaltplan einer erfindungsgemäßen Decodiereinrichtung mit nachgeschalteten Schieberegistern für 16-Bit-Datensätze und

Fig. 4 den Schaltplan einer erfindungsgemäßen Decodiereinrichtung für in einem Biphase-Mark Code empfangene 16-Bit-Datensätze.

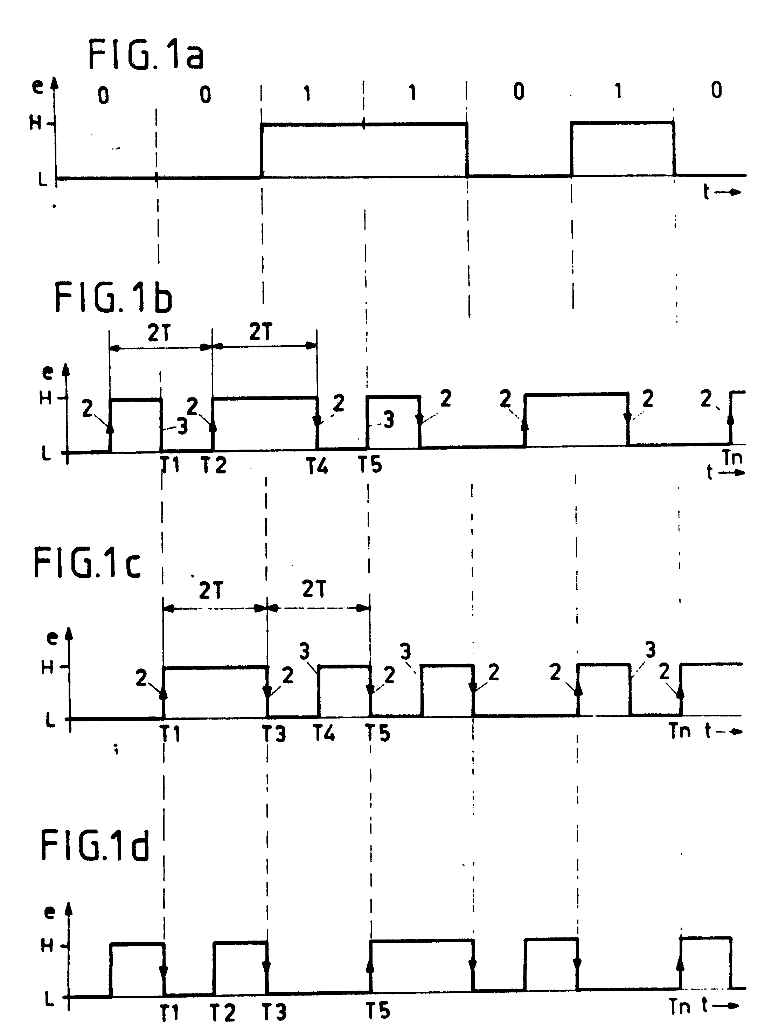

Ein Impulsdiagramm Fig. 1a zeigt zu übertragende Daten in bekannter Darstellung. Die Signalspannung ist dabei mit e bezeichnet; die Signalpegel mit H und L, die Zeitachse mit t.

Die Daten Fig. 1a sind in Fig. 1b in einem Biphase-Level Code, in Fig. 1c in einem Biphase-Mark Code und in Fig. 1d in einem Biphase-Space Code dargestellt.

In Fig. 1b bis 1d sind die Perioden mit T1 . . . Tn bezeichnet.

Die Biphase-Codes weisen, wie aus Fig. 1b und Fig. 1c ersichtlich, eine Periodizität von 2T auf. In den Intervallen von 2T läßt sich immer eine Signalflanke 2, eine sogenannte periodische Flanke, beobachten. Diese 2T-Periodizität besteht nur im Vorkommen dieser Flanke; ihre Polarität ist dabei nicht gegeben. Diese Polarität, ansteigende oder abfallende Flanke, variiert entsprechend den zu übertragenden Daten — Datenübertragungsrate = 1/2T —, so daß eine Zuordnung festgelegt werden kann. Beispielsweise bedeutet eine ansteigende periodische Flanke 2 in Fig. 1b logisch Null = 0, während eine abfallende periodische Flanke logisch Eins = 1 charakterisiert. Die übrigen Signalflanken 3 sind in ihrem Vorkommen aperiodisch; sie kommen nur dann vor, wenn sich die Polarität der periodischen Flanken in Folge der momentanen Daten-Bit-Kombination nicht ändert.

Aus diesem Zusammenhang läßt sich erkennen, daß aufgrund der Polarität der periodischen Flanken in einem Empfangssignal bei einem Biphase-Code die ursprüngliche Datenfolge rekonstruiert werden kann.

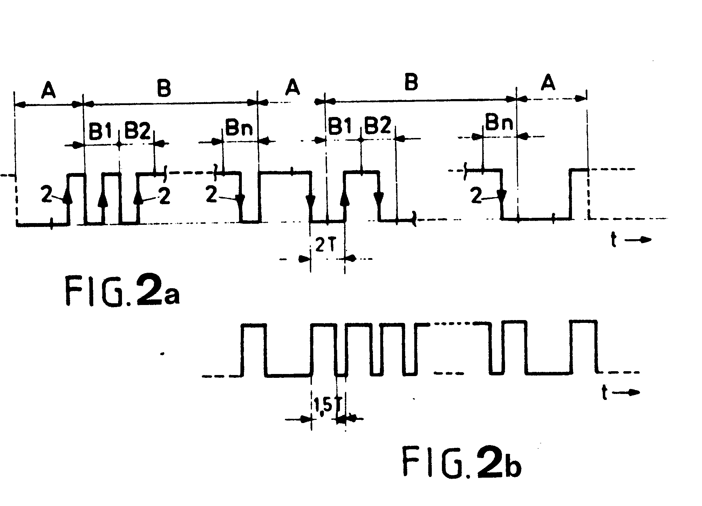

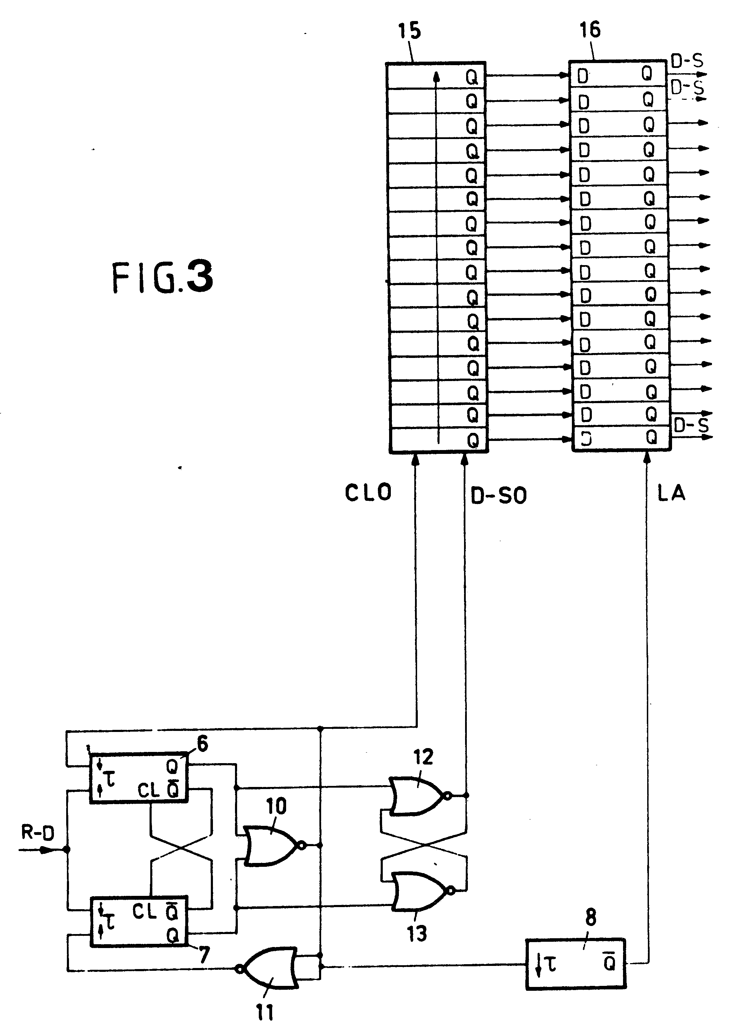

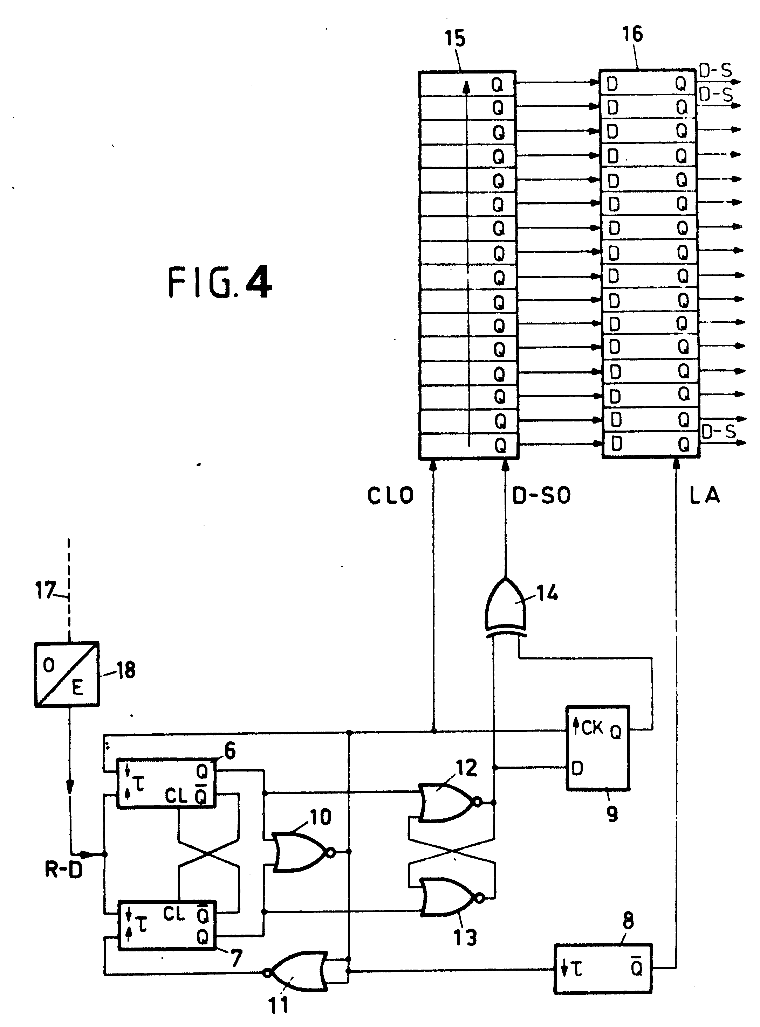

Fig. 2a zeigt Datensätze B bestehend aus B1. . .Bn Bits im Biphase-Level Code mit jeweils einem auf minimalen Zeitverlust optimierten Startzeichen A, welches eine Synchronisierung des Decodierers bei jedem Start und zugleich (mit einem in Fig. 3, 4 dargestellten Zusatz) das Erkennen des Endes des jeweiligen Datensatzes B erlaubt. Um den konstanten Mittelwert des Codes durch das Hinzufügen der Startzeichen A nicht zu verändern, können vorzugsweise die nacheinander folgenden Startzeichen A in der Polarität alterniert werden, wie in Fig. 2a angedeutet ist.

Das Impulsdiagramm Fig. 2b zeigt die Abtastimpulse zur Detektion der Datensätze Fig. 2a mit der Impulslänge $\tau = 1,5\,T$.

Die erfindungsgemäße Decodiereinrichtung gemäß Fig. 3 dient zur Decodierung von asynchron in 16-Bit-Datensätzen übertragenen, Biphase-Level-codierten Daten.

Das Empfangssignal R-D ist den Eingängen eines Zeitglieds, bestehend aus zwei über die Clear-Eingänge CL zueinander rückgekoppelten monostabilen Multivibratoren 6 und 7, zugeführt. Die Q-Ausgänge der Multivibratoren 6 und 7 sind über ein NOR-Gatter 10 zusammengefaßt. Dessen Ausgang ist auf den zweiten Eingang des Multivibrators 6 direkt zurückgeführt, während die Rückführung auf den zweiten Eingang des Multivibrators 7 über einen Inverter, ein NOR-Gatter 11, erfolgt.

Diese Kombination ist eine Variante eines nicht retriggerbaren, auf beide Polaritäten der Signalflanken ansprechenden Zeitgliedes; es kann auf einfache Weise mit einem doppelten, monostabilen Multivibrator (z. B. Fairchild Typ F 96 502) realisiert werden. Am Ausgang des NOR-Gatters 10 wird ein Taktsignal CLO (Clock) abgenommen, welches ein Schieberegister 15 taktet.

Dem Zeitglied ist ein Zwischenspeicher, in bekannter Weise aus NOR-Gattern 12 und 13 gebildet, nachgeschaltet. Am Ausgang des NOR-Gatters 12 erscheint ein serielles Datensignal D-SO, welches dem Dateneingang des Schieberegisters 15, als erste Stufe einer Umsetzung in parallele Datensignale 16, zugeführt wird. Dem Steuereingang des Schieberegisters 15 werden die Taktsignale CLO zugeführt, welche das Einlesen des seriellen Datensignals D-SO in das Schieberegister 15 steuern.

Zusätzlich ist der Ausgang des NOR-Gatters 10 zu dem einen Triggereingang eines Multivibrators 8 geführt. Der Ausgang des Multivibrators 8 ist auf einen Steuereingang LA (Latch) eines 16-Bit-Speichers 16 geführt. An den Q-Ausgängen des Speichers 16 können die Datensignale D-S parallel abgenommen werden. Der monostabile Multivibrator 8 ist auf eine Impulslänge von 2,5 T eingestellt. Er überwacht die Triggerfolge, indem er alle 2T im Takt des Taktsignals CLO für die Abtastung getriggert wird. Beim Ausbleiben der periodischen Flanke und damit des Taktes für die Abtastung, am Ende des Datensatzes, generiert er einen Befehl LA zum Speichern des im Schieberegister eingelesenen Datensatzes im 16-Bit-Speicher 16. Diese Erkennung des Endes des Datensatzes, kann mit einer an sich bekannten Überwachung der Länge des Datensatzes kombiniert werden, um das Ausbleiben der periodischen Flanke durch einen Fehler auf der Übertragungsstrecke vom wirklichen Ende des Datensatzes unterscheiden zu können.

Eine weitere Möglichkeit, Übertragungsfehler, respektive die Plausibilität der Daten-Codierung zu überwachen, besteht in einer doppelten Abtastung jedes Daten-Bits, nämlich mit der ansteigenden und abfallenden Flanke des vom monostabilen Multivibrators 8 generierten Impulses (bzw. durch von diesen abgeleiteten Strobe-Impulsen).

Die Variante nach Fig. 4 dient zum Decodieren von 16-Bit-Datensätzen im Biphase-Space Code. Hierzu wird die in Fig. 3 dargestellte Schaltungsanordnung um einen zusätzlichen logischen Schaltkreis ergänzt, welcher die Polarität der letzten mit der der vorletzten periodischen Signalflanke vergleicht. Dadurch wird die gesendete Datenfolge rekonstruiert.

Realisiert ist dies mittels einer zusätzlichen Kippschaltung 9, wiederum einem D-Flipflop, welches die Information der vorletzten Polarität speichert und einem nachgeschalteten EXOR-Gatter, welches beide Polaritäten vergleicht.

Der in Fig. 4 beschriebene Decodierer für 16-Bit-Datensätze im Biphase-Space Code kann in einfachster Weise zu einem Decodierer für einen Biphase-Mark Code umgestaltet werden. Da der Biphase-Mark Code invers zum Biphase-Space Code ist, genügt es, das in Fig. 4 dargestellte EXOR-Gatter 14 durch ein EXNOR-Gatter zu ersetzen.

In der Ausführung nach Fig. 4 wird das Empfangssignal R-D von einem Opto/Elektrowandler 18 geliefert. Dieser empfängt seine Eingangssignale von einer Lichtleiter-Übertragungsstrecke 17.

Die dargestellten beispielhaften Schaltungsanordnungen lassen sich selbstverständlich durch andere Logik-Bausteine mit gleichwertigen Funktionen realisieren.

Die erfindungsgemäßen Decodierer eignen sich für synchrone Datenübertragungen, asynchrone Datenübertragungen mit kontinuierlichem oder intermittierendem Datenfluß, für Datenübertragungen mit Datenmultiplex (d. h. einzelne Datensätze zusammengefügt in einem längeren Datensatz) und für Bus-Systeme mit nicht synchronisiertem Sendetakt der Datenquellen.

**Patentansprüche**

1. Einrichtung zur Decodierung eines in einer Biphase-Codierung empfangenen Signals (R-D), mit einem nicht retriggerbaren Zeitglied (6, 7) mit mindestens zwei Ausgängen (6Q, 7Q), das auf Flanken beider Polaritäten triggert und dessen Impulslänge ($\tau$) zwischen einer Periodenlänge (T) und zwei Periodenlängen (2T) liegt, dadurch gekennzeichnet, daß ein erster Ausgang (6Q) des Zeitgliedes (6, 7) durch negative und ein zweiter Ausgang (7Q) desselben durch positive Flanken jeweils für die Dauer einer Impulslänge ($\tau$) gesetzt wird und daß dem Zeitglied (6, 7) eine erste Logikschaltung (10) nachgeschaltet ist, welche aus den beiden am ersten Ausgang (6Q) und am zweiten Ausgang (7Q) des Zeitgliedes (6, 7) anliegenden Ausgangssignalen ein Taktsignal (CLO) bildet sowie eine zweite Logikschaltung (12, 13), welche aus besagten Ausgangssignalen des Zeitgliedes (6, 7) das decodierte Signal (D-SO) erzeugt.

2. Einrichtung nach Anspruch 1, dadurch gekennzeichnet, daß die erste Logikschaltung als NOR-Gatter (10) ausgebildet ist.

3. Einrichtung nach Anspruch 1 oder 2, zur Decodierung eines in Biphase-Level-Codierung empfangenen Signals (R-D), dadurch gekennzeichnet, daß die zweite Logikschaltung als Zwischenspeicher (12, 13) ausgebildet ist, an dessen Setzeingängen die Ausgangssignale des Zeitgliedes (6, 7) anliegen.

4. Einrichtung nach Anspruch 1 oder 2 zur Decodierung eines in Biphase-Space-Codierung empfangenen Signals (R-D), dadurch gekennzeichnet, daß die zweite Logikschaltung einen Zwischenspeicher (12, 13) enthält, an dessen Setzeingängen die Ausgangssignale des Zeitgliedes (6, 7) anliegen, ein D-Flip-Flop (9), an dessen Setzeingang (9D) das Ausgangssignal des Zwischenspeichers (12, 13) und an dessen Clock-Eingang (9CK) das Taktsignal (CLO) anliegt, sowie ein EXOR-Gatter (14), an dessen Eingänge die Ausgangssignale des Zwischenspeichers (12, 13) und des D-Flip-Flops (9) geführt werden.

5. Einrichtung nach einem der Ansprüche 1 bis 4, dadurch gekennzeichnet, daß das Zeitglied (6, 7) aus zwei zueinander in Wirkverbindung stehenden Zeitgliedern (6, 7) besteht, von dem das eine Zeitglied (6) auf negative und das andere Zeitglied (7) auf positive Signalflanken triggert.

6. Einrichtung nach Anspruch 5, dadurch gekennzeichnet, daß jedes der beiden Zeitglieder (6, 7) ein nicht retriggerbares Monoflop mit einer zwischen einer Periodenlänge (T) und zwei Periodenlängen (2T) liegenden Impulsdauer ($\tau$) ist.

7. Einrichtung nach einem der Ansprüche 1 bis 6 für eine asynchrone Datenübertragung mit Erkennung des Endes jeden Datensatzes, dadurch gekennzeichnet, daß dem Zeitglied (6, 7) ein retriggerbares Zeitglied (8) nachgeschaltet ist, dessen Impulslänge ($\tau$) größer als zwei Perioden (2T) und kleiner als der kürzeste zeitliche Abstand zwischen zwei nacheinanderfolgenden, Datensätzen (B) des empfangenen Signals (R-D) ist, wobei die Triggerung durch jede periodische Signalflanke (2) des empfangenen Signals (R-D) erfolgt und das Erkennen des Endes jeden Datensatzes (B) durch ein Rücksetzsignal am Ausgang (Q) des retriggerbaren Zeitgliedes (8) erfolgt.

8. Verwendung einer Einrichtung nach einem der Ansprüche 1 bis 7 zum Betrieb einer Lichtleiter-Übertragungsstrecke.

## Claims

1. A device for decoding a signal (R-D) which is received in a biphase coding, having a non-retriggerable timing section (6, 7) with at least two outputs (6Q, 7Q) which section triggers at the edges of both polarities and the pulse length ($\tau$) of which lies between the length of one period (T) and two period lengths (2T), characterised in that a first output (6Q) of the timing section (6, 7) is set by negative edges and a second output (7Q) of the said timing section is set by positive edges, in each case for the duration of one pulse length ($\tau$) and that the timing section (6, 7) is followed by a first logic circuit (10) which forms from the two output signals present at the first output (6Q) and at the second output (7Q) of the timing section (6, 7) a clock signal (CLO) and a second logic circuit (12, 13) which generates from the said output signals of the timing section (6, 7) the decoded signal (D-SO).

2. A device according to claim 1, characterised in that the first logic circuit is constructed as a NOR gate (10).

3. A device according to claim 1 or 2, for decoding a signal (R-D) received in biphase-level coding, characterised in that the second logic circuit is constructed as a temporary store (12, 13) at the set inputs of which the output signals of the timing section (6, 7) are present.

4. A device according to claim 1 or 2, for decoding a signal (R-D) received in biphase-space coding, characterised in that the second logic circuit contains a temporary store (12, 13) at the set inputs of which the output signals of the timing section (6, 7) are present, a D flip-flop (9) at the set input (9D) of which the output signal of the temporary store (12, 13) and at the clock input (9CK) of which the clock signal (CLO) are present and a EXOR gate (14) to the inputs of which the output signals of the temporary store (12, 13) and of the D flip-flop (9) are fed.

5. A device according to one of claims 1 to 4, characterised in that the timing section (6, 7) consists of two timing sections (6, 7) which are effectively connected with each other and of which one timing section (6) triggers on negative signal edges and the other timing section (7) triggers on positive signal edges.

6. A device according to claim 5, characterised in that each of the two timing sections (6, 7) is a non-retriggerable monostable flip-flop having a pulse duration ($\tau$) lying between the length of one period (T) and two period lengths (2T).

7. A device according to one of claims 1 to 6 for asynchronous data transmission including detection of the end of each data record, characterised in that the timing section (6, 7) is followed in the circuit by a retriggerable timing section (8) the pulse length ($\tau$) of which is greater than two periods (2T) and smaller than the shortest distance in time between two successive data records (B) of the received signal (R-D), the triggering taking place by each periodic signal edge (2) of the received signal (R-D) and the end of each data record (B) being detected by means of a reset signal at the output (Q) of the retriggerable timing section (8).

8. Application of a device according to one of claims 1 to 7 for operating an optical waveguide transmission path.

## Revendications

1. Dispositif pour le décodage d'un signal reçu selon un codage biphasé (R-D), présentant un élément de temporisation ne pouvant pas être redéclenché (6, 7) présentant au moins deux sorties (6Q, 7Q), qui est déclenché par des flancs des deux polarités et dont la longueur d'impulsion ($\tau$) est située entre une longueur de période (T) et deux longueurs de période (2T), caractérisé en ce qu'une première sortie (6Q) de l'élément de temporisation (6, 7) est positionnée par des flancs négatifs et une deuxième sortie (7Q) de cet élément est positionnée par des flancs positifs, chaque fois pour la durée d'une longueur d'impulsion ($\tau$), et l'élément de temporisation (6, 7) est suivi d'un premier circuit logique (10) qui forme à partir des deux signaux de sortie présents à la première sortie (6Q) et à la deuxième sortie (7Q) de l'élément de temporisation (6, 7), un signal d'horloge (CLO), ainsi que d'un deuxième circuit logique (12, 13) qui produit, à partir des dits signaux de sortie de l'élément de temporisation (6, 7), le signal décodé (D-SO).

2. Dispositif suivant la revendication 1, caractérisé en ce que le premier circuit logique a la forme d'un circuit NON-OU 10.

3. Dispositif suivant la revendication 1 ou 2, pour le décodage d'un signal reçu selon un codage de niveau biphasé (R-D), caractérisé en ce que le deuxième circuit logique a la forme d'une mémoire intermédiaire (12, 13), aux entrées de positionnement de laquelle sont présents les signaux de sortie de l'élément de temporisation (6, 7).

4. Dispositif suivant la revendication 1 ou 2 pour le décodage d'un signal reçu avec un codage d'espace biphasé (R-D), caractérisé en ce que le deuxième circuit logique contient une mémoire intermédiaire (12, 13), aux entrées de positionnement de laquelle sont présents les signaux de sortie de l'élément de temporisation (6, 7), une bascule D (9), à l'entrée de positionnement (9D) de laquelle est présent le signal de sortie de la mémoire intermédiaire (12, 13) et à l'entrée d'horloge (9CK) de laquelle est présent le signal d'horloge (CLO), de même qu'un circuit-port OU EXCLUSIF (14), aux entrées duquel sont amenés les signaux de sortie de la mémoire intermédiaire (12, 13) et de la bascule D (9).

5. Dispositif suivant l'une quelconque des revendications 1 à 4, caractérisé en ce que l'élément de temporisation (6, 7) est constitué de deux éléments de temporisation (6, 7) connectés de manière active l'un à l'autre, dont le premier (6) déclenche pour des flancs de signal négatifs et l'autre (7) pour des flancs de signal positifs.

6. Dispositif suivant la revendication 5, caractérisé en ce que chacun des deux éléments de temporisation (6, 7) est une bascule monostable ne pouvant pas être redéclenchée dont la durée d'impulsion ($\tau$) est comprise entre une longueur de période (T) et deux longueurs de période (2T).

7. Dispositif suivant l'une quelconque des revendications 1 à 6 pour une transmission de données asynchrone avec reconnaissance de la fin de chaque article, caractérisé en ce que l'élément de temporisation (6, 7) est suivi d'un élément de temporisation pouvant être redéclenché (8) dont la longueur d'impulsion ($\tau$) est supérieure à deux périodes (2T) et inférieure à l'intervalle de temps le plus court entre deux articles (B) successifs du signal reçu (R-D), le déclenchement étant effectué à chaque flanc de signal périodique (2) du signal reçu (R-D) et la reconnaissance de la fin de chaque article (B) étant réalisée au moyen d'un signal de repositionnement à la sortie (Q) de l'élément de temporisation pouvant être redéclenché (8).

8. Utilisation d'un dispositif suivant l'une quelconque des revendications 1 à 7 pour le fonctionnement d'un trajet de transmission à conducteur de lumière.

# FIG.1a

e | H | L

0  0  1  1  0  1  0

t →

# FIG.1b

2T  2T

e | H | L

2  3  2  2  3  2  2  2  2  2

T1  T2  T4  T5  Tn

t →

# FIG.1c

2T  2T

e | H | L

2  2  3  2  3  2  2  2  3  2

T1  T3  T4  T5  Tn  t →

# FIG.1d

e | H | L

T1  T2  T3  T5  Tn  t →

FIG.**2**a

FIG.**2**b

0 059 493

FIG.3

FIG.4